# EUROPEAN PATENT SPECIFICATION

(11) **EP 3 712 201 B1**
(45) Date of publication and mention of the grant of the patent: **30.04.2025**
(21) Application number: 18879796.3
(22) Date of filing: 25.10.2018
(51) Int. Cl.: C08J 5/18, B32B 27/00, B44C 1/17

(54) **FILM, MOLDING TRANSFER FOIL COMPRISING SAME, FILM ROLL, AND METHOD FOR PRODUCING FILM**
FOLIE, DARAUS HERGESTELLTE FORMÜBERTRAGUNGSFOLIE, FOLIENROLLE UND VERFAHREN ZUR HERSTELLUNG DER FOLIE
FILM, FEUILLE DE TRANSFERT DE MOULAGE LE COMPRENANT, ROULEAU DE FILM, ET PROCÉDÉ DE PRODUCTION DE FILM

(30) Priority: 17.11.2017 JP 2017221601
(43) Date of publication of application: 23.09.2020
(73) Proprietor: Toray Industries, Inc., Tokyo 103-8666 (JP); Okura Industrial Co., Ltd., Marugame-shi, Kagawa 763-8508 (JP)
(72) Inventor: KITAMURA Yutaka, Otsu-shi Shiga 520-2141 (JP); IWAKI Yuusuke, Marugame-shi Kagawa 763-8508 (JP); YAMAJI Masatsugu, Marugame-shi Kagawa 763-8508 (JP)
(74) Representative: Prüfer & Partner mbB Patentanwälte · Rechtsanwälte
(86) International application number: PCT/JP2018/039686
(87) International publication number: WO 2019/097977

(56) References cited:
- EP-A1- 2 208 757
- EP-A1- 2 727 723
- EP-A1- 2 942 180
- WO-A1-2007/132641
- WO-A1-2011/030684
- WO-A1-2014/103988
- JP-A- 2012 118 238
- JP-A- 2014 071 251
- JP-A- 2017 137 469
- US-A1- 2006 272 768
- US-A1- 2010 216 963

## Description

### TECHNICAL FIELD

The present invention relates to a film, a molding transfer foil using the film, a film roll, and a method for producing the film.

### BACKGROUND ART

As environmental consciousness has been enhanced in recent years, demands are increasing for solventless painting techniques and alternative techniques to plating that are useful for production of building materials, automobile parts, portable telephones, and home electric appliances and in particular, films have been in wider use in their decoration processes. One of the generally known methods for decorating three-dimensional shaped base materials is to add a decorative layer on a thermoplastic resin film and transferred to the base material during the molding step. There is a proposal of applying a polyolefin resin based film to this decoration method. If a polyolefin resin based film is applied decoration purposes, however, it is impossible to realize sufficiently good surface quality and a variety of attempts are being made in an effort to improve them for practical uses.

For example, Patent document 1 discloses a design technique that achieves a good surface appearance in addition to high processability and deep drawability by applying a film that contains a cyclic olefin resin as main component. Patent document 2 discloses a design technique that performs knurling on a film to realize both a high windability in film production and processing steps and high smoothness of molding transfer surfaces.

### PRIOR ART DOCUMENTS

### PATENT DOCUMENTS

Patent document 1: Japanese Unexamined Patent Publication (Kokai) No. 2013-071419
Patent document 2: International Publication WO 2014/103988

### SUMMARY OF INVENTION

### PROBLEMS TO BE SOLVED BY THE INVENTION

However, the technique proposed in Patent document 1 described above is not appropriately designed to give sufficient consideration to appearance quality and processability in processing steps such as for coating, lamination, printing, and vapor deposition on films. On the other hand, the design technique proposed in Patent document 2 is not appropriately designed to fully realize a high film conveying performance, processability, and appearance quality due to problems caused by distortion that occurs at both side edge parts of the film during processing steps such as for coating, lamination printing, and vapor deposition of films.

In view of the background relating to the conventional techniques, an object of the present invention is to provide a film showing high transportability and processability in production and processing steps of the film and also having high appearance quality and moldability, a molding transfer foil using the film, a roll produced by winding the film, and a method for producing the film.

### MEANS OF SOLVING THE PROBLEMS

As a result of intensive studies for solving the above problems, the inventors have arrived at the present invention after finding that the problems can be solved as described below. The film according to the present invention is as described below:
(1) A film including a cyclic olefin resin as main component, having a strain of 0.3 mm or more and 2.0 mm or less at both side edge parts of the film, and having longitudinally arranged knurled parts in each side region ranging between a distance of 1 mm or more and a distance of 100 mm or less measured from either side edge part of the film, and each raised portion in the knurled parts in both side regions having a height equal to 10% or more and less than 20% of the film thickness.
(2) A film as set forth in (1), wherein the maximum diameter of each depressed portion in the knurled parts in both side regions is 0.1 mm or more and less than 2.0 mm.
(3) A film as set forth in either (1) or (2), wherein X/Y is 0.5 or more and 10 or less wherein X (mm²) is the area of each depressed portion and Y (mm²) is the area of each raised portion in the knurled parts.
(4) A film as set forth in any one of (1) to (3), wherein the film is a molding film.
(5) A film as set forth in (4), wherein the molding film is a film for molding transfer foil.
(6) A molding transfer foil comprising a film as set forth in any one of (1) to (5), a decorative layer, and an adhesive layer stacked in this order.
(7) A molding transfer foil as set forth in (6), wherein a protective layer is located between the film and the decorative layer.
(8) A film roll having a structure in which a film as set forth in any one of (1) to (5) is wound around a core.
(9) A method for producing a film as set forth in any one of (1) to (5) including a knurling step for forming knurled parts by passing the film between a smooth roll and a knurling roll that are fixed with a gap equal to 75% or more and 95% or less of the thickness of the film.
(10) A method for producing a film as set forth in (9), wherein the temperature of each knurling roll is 190°C or more and 250°C or less.

### ADVANTAGEOUS EFFECTS OF THE INVENTION

The present invention can provide a film showing high transportability and processability in production and processing steps of the film and also having high appearance quality and moldability, a molding transfer foil using the film, a roll produced by winding the film, and a method for producing the film.

The use of the film and the molding transfer foil according to the present invention serves to allow molded members produced through molding and decoration steps using various molding methods such as vacuum molding, pneumatic molding, and press molding (hereinafter occasionally referred to as product members) to have excellent design properties. Therefore, the film and the molding transfer foil according to the present invention can be suitably used for decorating molded members such as for building materials, automobile parts, mobile phones, electrical appliances, and gaming machine parts.

### BRIEF DESCRIPTION OF THE DRAWINGS

[Fig. 1] This is a schematic top view of a knurled part according to one embodiment of the film according to the present invention.
[Fig. 2] This gives schematic top views of typical longitudinally arranged knurled parts.
[Fig. 3] This gives a schematic top view (A) of a knurled part according to one embodiment of the film of the present invention and a schematic cross-sectional view (B) showing a section parallel to the thickness direction.

### DESCRIPTION OF PREFERRED EMBODIMENTS

The film according to the present invention includes a cyclic olefin resin as main component, has a strain of 0.3 mm or more and 2.0 mm or less at both side edge parts of the film, and has longitudinally arranged knurled parts in each side region ranging between a distance of 1 mm or more and a distance of 100 mm or less measured from either side edge part of the film, each raised portion in the knurled parts in both side regions having a height equal to 10% or more and less than 20% of the film thickness.

It is important for the film according to the present invention to contain a cyclic olefin resin as main component from the viewpoint of ensuring a high productivity, processability in processing steps, and moldability at the same time. For the present invention, the cyclic olefin resin means a resin having an alicyclic structure in the backbone chain of the polymer, and the components derived from cyclic olefin monomers account for 50% by weight or more and 100% by weight or less of the entire polymer, which accounts for 100% by weight. Here, a cyclic olefin monomer is a hydrocarbon compound having a cyclic structure formed of carbon atoms and having a carbon-carbon double bond in the ring structure.

Furthermore, the expression "containing a cyclic olefin resin as main component" means that the cyclic olefin resin accounts for 50 mass% or more and less than 100 mass% of all components of the film, which accounts for 100 mass%.

The cyclic olefin monomer is not particularly limited unless the effect according to the present invention is impaired, but bicyclo[2,2,1]hepto-2-ene (hereinafter occasionally referred to as norbornene), cyclopentadiene, 1,3-cyclohexadiene, and derivatives thereof are preferably used, of which norbornene is more preferred, from the viewpoint of productivity and surface appearance required when the film is used for decoration.

As long as the above requirements are satisfied, the cyclic olefin resin used for the present invention may be any of the following: a resin produced by polymerizing only one type of cyclic olefin monomers, a resin produced by copolymerizing a plurality of types of cyclic olefin monomers, and a resin produced by copolymerizing one type or a plurality of types of cyclic olefin monomers with one type or a plurality of types of linear olefin monomers.

Here, a linear olefin monomer is a hydrocarbon compound having a carbon-carbon double bond and not having a cyclic structure formed of carbon atoms. The combination of cyclic olefin monomers and linear olefin monomers is not particularly limited unless the effects of the present invention are impaired.

Only one of such cyclic olefin resins may be used, or a mixture of a plurality thereof may be used. When a plurality of cyclic olefin resins are used as a mixture, the content of the cyclic olefin resins is calculated based on the total weight of all cyclic olefin resins.

For the present invention, it is preferable, from the viewpoint of productivity, moldability, and surface appearance required when the film is used for decoration, that at least one of polynorbornene, polycyclopentadiene, polycyclohexadiene, and a copolymer of norbornene and ethylene is used as the cyclic olefin resin, and it is more preferable to use polynorbornene and/or a copolymer of norbornene and ethylene.

To produce a resin from only one type of cyclic olefin monomer, generally known methods such as addition polymerization and ring opening polymerization of cyclic olefin monomers can be used. For example, polynorbornene can be produced by ring opening metathesis polymerization of norbornene followed by hydrogenation, or addition polymerization of norbornene. Also, polycyclopentadiene and polycyclohexadiene can be produced by 1,2-,1,4- addition polymerization of cyclopentadiene or cyclohexadiene followed by hydrogenation.

To produce a copolymer resin of a cyclic olefin monomer and a linear olefin monomer, generally known methods such as addition polymerization of the cyclic olefin monomer and the linear olefin monomer can be used. For example, a copolymer of norbornene and ethylene can be produced by addition polymerization of norbornene and ethylene.

For the present invention, furthermore, as long as the above-mentioned requirements are satisfied and the effects of the present invention are not impaired, other components including flame retardant, heat stabilizer, antioxidant, ultraviolet absorber, antistatic agent, plasticizer, tackifier, defoaming agent such as polysiloxane, and coloring agent such as pigment and dye may be contained in an appropriate amount as required.

From the viewpoint of achieving both a high processability in processing steps and a high moldability, the film according to the present invention preferably has a storage elastic modulus at 75°C of 1,000 MPa or more and 3,000 MPa or less, and a storage elastic modulus at 120°C of 100 MPa or less. The storage elastic modulus is an index that represents the viscoelastic characteristics of a substance based on the phase lag between its stress and strain characteristics. The storage elastic modulus can be measured by a generally known dynamic viscoelasticity measuring device, and detailed measurement conditions will be described later. The expression of "having a storage elastic modulus at 75°C of 1,000 MPa or more and 3,000 MPa or less" means that the storage elastic modulus of the film at 75°C is 1,000 MPa or more and 3,000 MPa or less in both the length direction and the width direction, and the expression relating to the storage elastic modulus at 120°C should be interpreted in the same way. Here, the length direction is the direction in which the film travels during its production whereas the width direction is the direction that is parallel to the film surfaces and perpendicular to the length direction.

Note that for a film is wound on a roll, its length direction and width direction can be easily identified, whereas in the case of a sheet-like film which is not wound on a roll, its length direction and width direction cannot be easily identified. In such a case, the storage elastic modulus of the film at 75°C is measured in one arbitrarily selected direction by the method described later, and the procedure of rotating the film rightward by 5° and performing the same measurement is repeated until the total angle reaches 180° to identify the direction that gives the largest value, which is taken as the length direction.

Adjusting the storage elastic modulus at 75°C to 1,000 MPa or more ensures reduced dimensional changes in processing steps such as coating, lamination, printing, and vapor deposition. Adjusting the storage elastic modulus at 75°C to 3,000 MPa or less, furthermore, allows the film to maintain a required toughness while suppressing the decrease in the productivity of the film. From the viewpoint of dimensional stability, which is important in relation to the processability in processing steps, the storage elastic modulus at 75°C is more preferably 1,100 MPa or more, and still more preferably 1,200 MPa or more.

The method used for adjusting the storage elastic modulus of the film at 75°C to 1,000 MPa or more and 3,000 MPa or less or in the above preferable range is not particularly limited unless the effect according to the present invention is impaired, and for example, a good method is to use, as the above film, a laminated film in which at least one of the layers forming the film has a glass transition temperature of 80°C or more.

The glass transition temperature of such a layer can be measured by the following method. First, a layer sample is cut out from the film and heated in a differential scanning calorimeter to record its waveform on a graph in which the vertical axis represents the temperature while the horizontal axis represents the thermal behavior. In the waveform obtained, a point where the baseline starts to shift downward as a result of transition from a glass state to a rubber state is identified, and a tangent line to the waveform is drawn at the inflection point. The temperature at the intersection of this tangent and the baseline represents the glass transition point of the layer. When a plurality of points of transition from a glass state to a rubber state are found, the glass transition temperature of the layer is determined based on the transition that causes the largest shift of the baseline.

Good means according to this embodiment include, for example, adjusting the ratio of the copolymerization components of the cyclic olefin resin contained in the layer and adopting a plurality of resins having different glass transition temperatures to use as the cyclic olefin resin in the layer. As a specific example of these means, described below is a method in which a copolymer of norbornene and ethylene is used as the cyclic olefin resin in the layer.

When a copolymer of norbornene and ethylene is used as the cyclic olefin resin in the layer, the glass transition temperature of the layer can be increased by increasing the proportion of the component derived from norbornene in the polymer chain. When using a mixture of a plurality of copolymers of norbornene and ethylene that differ in the proportion of the norbornene-derived component in the polymer chain, the glass transition temperature of the layer can be increased by increasing the content of the resin that is higher in the proportion of norbornene-derived component in the polymer chain.

In addition, from the viewpoint of easily adjusting the storage elastic modulus of the film at 75°C to 1,000 MPa or more and 3,000 MPa or less or in the above preferable range, it is preferable that the total thickness of the layers having glass transition temperatures of 80°C or more accounts for 50% or more of the thickness of the entire film, which represents 100%. Here, in the case where there is only one layer having a glass transition temperature of 80°C or more in the film, the "proportion of the total thickness of the layers having glass transition temperatures of 80°C or more" is the proportion accounted for by the thickness of that layer in the entire film thickness whereas in the case where there are a plurality of such layers, it is the proportion accounted for by the total thickness of all relevant layers in the entire film thickness.

Furthermore, if the storage elastic modulus of the film at 120°C is 100 MPa or less, it not only ensures a high moldability, but also permits the use of a relatively low molding temperature of 150°C or less. Accordingly, such a film can be suitably used not only for molding a member having a relatively high melting point such as a metal member, but also for molding a member having a relatively low melting point such as a resin member.

If a higher moldability is required, it is more preferable for the film to have a storage elastic modulus at 120°C of 50 MPa or less, more preferably 20 MPa or less, and particularly preferably 18 MPa or less. The lower limit of the storage elastic modulus at 120°C is not particularly limited unless the effect of the present invention is impaired, but 0.5 MPa is a sufficiently high value from the viewpoint of the moldability of the films.

The method used for adjusting the storage elastic modulus of the film at 120°C to 100 MPa or less or in the above preferable range is not particularly limited unless the effect of the present invention is impaired, and for example, a good method is to use a film in which at least one of the layers forming the film has a glass transition temperature of 120°C or less.

Good means according to this embodiment include, for example, adjusting the ratio of the copolymerization components of the cyclic olefin resin contained in the layer and adopting a plurality of resins having different glass transition temperatures to use as the cyclic olefin resin in the layer. As a specific example of these means, described below is a method in which a copolymer of norbornene and ethylene is used as the cyclic olefin resin in the layer.

When a copolymer of norbornene and ethylene is used as the cyclic olefin resin in the layer, the glass transition temperature of the layer can be decreased by decreasing the proportion of the component derived from norbornene in the polymer chain. When using a mixture of a plurality of copolymers of norbornene and ethylene that differ in the proportion of the norbornene-derived component in the polymer chain, the glass transition temperature of the layer can be decreased by increasing the content of the resin that is lower in the proportion of norbornene-derived component in the polymer chain.

In addition, from the viewpoint of easily adjusting the storage elastic modulus of the film at 120°C to 100 MPa or less or in the above preferable range, it is preferable that the total thickness of the layers having glass transition temperatures of 120°C or less accounts for 50% or more of the thickness of the entire film, which represents 100%. In view of the above, it is more preferable that the total thickness of the layers having glass transition temperatures of 110°C or less accounts for 50% or more of the thickness of the entire film, which accounts for 100%, and it is still more preferable that the total thickness of the layers having glass transition temperatures of 100°C or less accounts for 50% or more.

That is, from the viewpoint of adjusting the storage elastic modulus at 75°C to 1,000 MPa or more and 3,000 MPa or less while adjusting the storage elastic modulus at 120°C to 100 MPa or less, it is preferable that the total thickness of the layers having glass transition temperatures of 80°C or more and 120°C or less accounts for 50% or more, more preferable that the total thickness of the layers having glass transition temperatures of 80°C or more and 110°C or less accounts for 50% or more, and still more preferable that the total thickness of the layers having glass transition temperatures of 80°C or more and 100°C or less accounts for 50% or more.

In the film according to the present invention, from the viewpoint of smoothness of the film, appearance quality, surface appearance required when the film is used for decoration, and productivity, it is important that the strain at both side edge parts of the film is 0.3 mm or more and 2.0 mm or less. The strain at the side edge parts of the film is an index expressing the flatness of the film at the ends of the width dimension, and the smaller the value, the flatter the film. The expression "the strain at both side edge parts of the film is 0.3 mm or more and 2.0 mm or less" means that the strain is 0.3 mm or more and 2.0 mm or less at each of the side edge parts of the film. Here, the measurement of the strain at the side edge parts of the film is performed by placing a film specimen having a size of 500 mm (length direction) × 1,000 mm (width direction) on a horizontal laboratory table and measuring the height of the film from the laboratory table using a caliper according to a procedure that is described in detailed below.

If the strain is more than 2.0 mm at least at either of the side edge parts of the film, the transportability of the film may deteriorate significantly when it is used as a molding transfer film, which will cause creasing and film breakage, possibly leading to a decrease in processability in processing steps. Focusing only on reducing the occurrence of creasing and film breakage, it is preferable that the strain at both side edge parts of the film is as small as possible. However, as described later, from the viewpoint of not impairing the smoothness of the film, appearance quality, and surface appearance required when the film is used for decoration while maintaining a high productivity, it is important that the height of each raised portion in the knurled parts is equal to 10% or more and less than 20% of the film thickness, and a film meeting this requirement will have a strain of 0.3 mm or more at the side edge parts of the film.

In view of the above, it is preferable that the film according to the present invention has a strain at both side edge parts of the film of 0.3 mm or more and 1.0 mm or less. Here, the values of strain at the two side edge parts of the film may be equal to or different from each other as long as they are 0.3 mm or more and 2.0 mm or less and unless the effect of the present invention is impaired.

From the viewpoint of smoothness of the film, appearance quality, surface appearance required when the film is used for decoration, and productivity, it is important that the film according to the present invention has longitudinally arranged knurled parts in each side region ranging between a distance of 1 mm or more and a distance of 100 mm or less measured from either side edge part of the film. The adoption of this embodiment makes it easy to adjust the strain at both side edge parts of the film to 0.3 mm or more and 2.0 mm or less or the above-mentioned preferable range and permits an improvement in the smoothness of the film, appearance quality, and surface appearance required when the film is used for decoration without impairing the productivity.

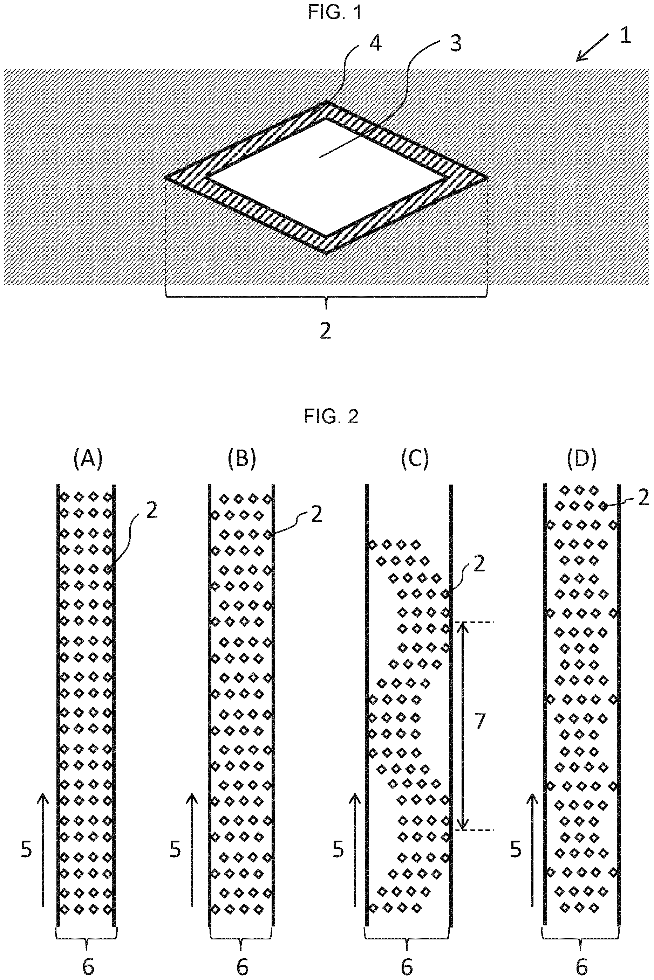

Here, a knurled part is an area contains a depressed portion and a raised portion surrounding the periphery thereof (see Fig. 1). Fig. 1 is a schematic top view of a knurled part according to one embodiment of the film according to the present invention. In Fig. 1, the film, knurled part, depressed portion in the knurled part, and raised portion in the knurled part are denoted by 1, 2, 3, and 4, respectively. The depressed portion in the knurled part and the raised portion in the knurled part will be hereinafter occasionally referred to simply as a depressed portion and raised portion, respectively.

A "region covering a distance of 1 mm or more and 100 mm or less from each side edge part of the film" is the region located between the line drawn in parallel with the length direction at a distance of 1 mm from the side edge part of the film and the line drawn in parallel with the length direction at a distance of 100 mm from the side edge part of the film. Longitudinally arranged knurled parts are located in a belt-like region in which a plurality of knurled parts are aligned in the length direction, and examples include, but not limited to, those shown in diagrams (A) to (D) in Fig. 2. In Fig. 2, knurled parts, length direction, and regions containing longitudinally arranged knurled parts are denoted by 2, 4, and 6, respectively. From the above viewpoint, it is preferable that such a region containing longitudinally arranged knurled parts is a region ranging between a distance of 2 mm or more and a distance of 50 mm or less measured from either side edge part of the film.

The method used for forming such knurled parts is not particularly limited unless the effect of the present invention is impaired, and examples include the described below in which a film is passing between a heated knurling roll and a smooth roll.

From the viewpoint of achieving improvement in film windability and suppression of film breakage in the processing steps while forming raised portions in the knurled parts, and further ensuring a high transfer foil processability, it is preferable that in the knurled parts in both side regions in the film according to the present invention, each depressed portion has a maximum diameter of 0.1 mm or more and less than 2.0 mm, more preferably 0.2 mm or more and 1.5 mm or less, and still more preferably 0.5 mm or more and 1.0 mm or less.

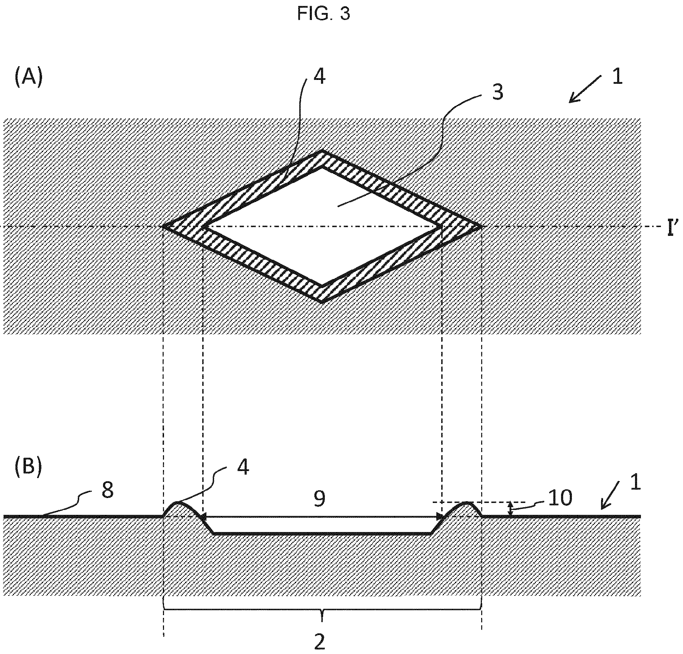

The knurled parts will be described below with reference to Fig. 3. Fig. 3 gives a schematic top view (A) of a knurled part according to an embodiment of the film of the present invention and a schematic cross-sectional view (B) showing a section parallel to the thickness direction (illustrating the cross section I-I' in (A)). Commonly, the knurled part 2 is formed by pressing a heated knurling roll against the film 1. In this step, a protrusion of the knurling roll is pressed against a portion of the film 1 to soften it to form a depressed portion 3 while at the same time, the softened film is pushed out around the periphery of the protrusion to form a raised portion 4 around the depressed portion 3. The raised portions 4 thus formed work to reduce the contact area between film layers in a roll produced by winding the film and accordingly serve to reduce the occurrence of scratches and blocking, and in the case where the two surfaces have different surface roughness values, furthermore, the transfer of the pattern of the rougher surface to the smoother surface will be reduced.

To determine the "maximum diameter of a depressed portion in a knurled part (9 in Fig. 3)", the outer periphery of the raised portion of the knurled part is observed at the height of the film surface (8 in Fig. 3) to identify two points on the outer periphery that have the largest point-to-point distance, and this distance between the two points is adopted. The maximum diameter of a depressed portion in a knurled part can be measured by using an optical interference microscope having a length measurement function. An example of such an optical interference microscope is VertScan (registered trademark) 2.0 manufactured by Ryoka Systems, Inc., and this optical interference microscope is operated under the conditions of using Forcus as viewing mode, a 530 nm white filter, and a ScanRange of 105 nm. The equipment and conditions that can be used for measurement are the same for the measurement of the "area X mm² of the depressed portion", "area Y mm² of the raised portion", and "height of the raised portion of a knurled part", which will be described later.

The "maximum diameter of the depressed portion of a knurled part" in the film according to the present invention can be determined by appropriately defining an area in a region ranging between a distance of 1 mm or more and a distance of 100 mm or less measured from either side edge part of the film in such a manner that the length of the area is equal to the length of the repeated pattern and examining the depressed portions of all the knurled parts contained in the area to determine their maximum diameters, followed by calculating their average. The length of the repeated pattern (7 in Fig. 2C) is the length of one of the pattern units that are arranged so that a pattern of knurled parts is repeated regularly in the length direction. In the case where periodicity is not present in the arrangement of knurled parts, an area for measurement is defined appropriately so that it has a length of 5 mm in the length direction.

If the maximum diameter of the depressed portions in the knurled part at least at either side edge part of the film is 2.0 mm or more, film breakage may occur, starting at a knurled part, as the film is conveyed in a processing step. If the maximum diameter of the depressed portions is less than 1.0 mm in the knurled part at least at either side edge part of the film, on the other hand, the raised portion will not formed completely, and accordingly, the above-mentioned effect of raised portions will not be realized sufficiently in some cases.

From the viewpoint of ensuring improvement in film windability and processability of transfer foil while preventing molded articles with deteriorated surface appearance from being resulted when the film is used as transfer foil, it is preferable for the film according to the present invention to have a X/Y ratio of 0.5 or more and 10 or less, more preferably 1.0 or more and 7.5 or less, and still more preferably 2.0 or more and 5.0 or less wherein X mm² and Y mm² represent the area of a depressed portion and the area of a raised portion, respectively, of a knurled part.

If the X/Y ratio, wherein X mm² and Y mm² represent the area of a depressed portion and the area of a raised portion, respectively, of a knurled part, is 10 or less, it ensures a decrease in the deformation of the film due to the formation of knurled parts, thereby reducing the strain at the side edge parts of the film of the film. As a result, it can suppress the decrease in productivity that may be caused by meandering, loose winding, or the like that are attributed to the strain at the side edge parts of the film of the film. In addition, since the generation of creases during conveyance is also reduced in the steps for transfer foil processing, it ensures improvement in the productivity of transfer foil and the surface appearance of the molded product produced by using the transfer foil for decoration. An X/Y ratio of 0.5 or more, on the other hand, serves to reduce the contact area between film layers in a roll produced by winding the film and accordingly reduce the occurrence of scratches and blocking, and in the case where the two surfaces have different surface roughness values, furthermore, the transfer of the pattern of the rougher surface to the smoother surface will be reduced, thereby suppressing the deterioration in smoothness of the film, appearance quality, and surface appearance of the molded product produced by using the transfer foil for decoration.

The area X mm² of the depressed portion and the area Y mm² of the raised portion of a knurled part can be measured using an optical interference microscope having a length measurement function. The "area X mm² of the depressed portion" and the "area Y mm² of the raised portion" in the film according to the present invention can be determined by appropriately defining an area in a region ranging between a distance of 1 mm or more and a distance of 100 mm or less measured from either side edge part of the film in such a manner that the length of the area is equal to the length of the repeated pattern and examining the depressed portions and raised portions in all knurled parts contained in the area to take measurements of their area X mm² and area Y mm², followed by calculating their average. In the case where periodicity is not present in the arrangement of knurled parts, an area for measurement is defined appropriately so that it has a length of 5 mm in the length direction.

For the film according to the present invention, it is important that the height of each raised portion of a knurled part is equal to 10% or more and less than 20% of the thickness of the film at both side edge parts of the film. The "height of the raised portion in a knurled part (10 in Fig. 3)" can be represented by the distance between the top of the raised portion and the film surface in the film's cross section that contains the normal to the film surface and the maximum diameter of the depressed portion of the knurled part. Here, in the case where there are a plurality of raised portions having different heights, the measurement is performed for the top of the raised portion having the largest distance from the film surface.

The "height of the raised portion of a knurled part" in the film according to the present invention can be determined by appropriately defining an area in a region ranging between a distance of 1 mm or more and a distance of 100 mm or less measured from either side edge part of the film in such a manner that the length of the area in the length direction is equal to the length of the repeated pattern and examining the raised portions of all the knurled parts contained in the area to determine their heights, followed by calculating their average. In the case where periodicity is not present in the arrangement of knurled parts, an area for measurement is defined appropriately so that it has a length of 5 mm in the length direction.

If the heights of the raised portions are less than 10% of the thickness of the film at least at either side edge part of the film, it may lead to deterioration in the smoothness of the film, appearance quality, and surface appearance required when the film is used for decoration. On the other hand, if the heights of the raised portions are 20% or more of the film thickness at least at either side edge part of the film, it may lead to an increased deformation of the film resulting from the formation of the knurled parts and an increased strain at the side edge parts of the film of the film. Consequently, meandering and loose winding can occur during the winding step and creasing can occur during conveyance in the processing step, possibly leading to a decrease in productivity and deterioration in the surface appearance required when the film is used for decoration. From the above point of view, it is preferable that the height of each raised portion of a knurled part is equal to 15% or more and less than 19% of the thickness of the film at both side edge parts of the film.

The method used for adjusting the heights of the raised portions of knurled parts to 10% or more and less than 20% of the film thickness or in the above preferable range is not particularly limited unless the effect of the present invention is impaired, and for example, a good method is to adjust the gap between the smooth roll and the knurling roll used for forming the knurled parts to a value in the range of 75% or more and 95% or less of the film thickness. Specifically, as the gap between the smooth roll and the knurling roll is narrowed within the above range, a larger portion of the resin will be softened when the knurling roll is pressed against it (to form deeper depressed portions), leading to an increase in the heights of the raised portions.

The thickness of the film according to the present invention is preferably 25 µm or more and 500 µm or less, more preferably 50 µm or more and 200 µm or less, and still more preferably 75 µm or more and 150 µm or less from the viewpoint of productivity, moldability, processability in processing steps, and manufacturing cost. If the thickness of the film is less than 25 µm, the production stability may decrease, possibly leading to the formation of creases in processing steps. If the thickness of the film is more than 500 µm, on the other hand, processability and formability in processing steps may deteriorate, possibly leading to an increase in cost.

The film according to the present invention is preferably a molding film, and more preferably a film for molding transfer foil, in order to ensure a high transportability and processability in the manufacturing and processing steps of the film as well as a good appearance quality and high formability. Here, the molding film refers to a peelable support film that serves for transferring a decorative layer or the like as described later to the member to be molded (adherend).

From the viewpoint of facilitating the addition of decoration to the member to be molded, it is important for the molding transfer foil according to the present invention to include the film according to the present invention, a decorative layer, and an adhesive layer positioned in this order. Here, the decorating layer is one designed to impart decorative features such as color, pattern, woodtone, metal-tone, and pearl-tone to the member to be molded. The term "the film according to the present invention, a decorative layer, and an adhesive layer positioned in this order" generally means a structure that contains the film according to the present invention, a decorative layer, and an adhesive layer positioned in this order regardless of whether or not there is another layer between the film according to the present invention, the decorative layer, and the adhesive layer.

In the molding transfer foil according to the present invention, it is preferable, from the viewpoint of protecting the surface of the product member, that the protective layer is positioned between the film according to the present invention and the decorative layer. Here, the protective layer means a layer that plays a role of protecting the decorative layer transferred to the product member. If such an embodiment is adopted, a product member having a surface with improved scratch resistance, weather resistance, and design will be obtained after adhering the molding transfer foil to the member to be molded and peeling off only the film.

The resin used for the protective layer in the molding transfer foil according to the present invention is not particularly limited unless the effect of the present invention is impaired, but from the viewpoint of avoiding deterioration in the appearance of the product member, it is preferably a resin having high transparency. Preferred ones include polyester based resin, polyolefin based resin, acrylate based resin, urethane based resin, fluorine based resin, polyvinyl acetate based resin, vinyl chloride-vinyl acetate copolymer, and ethylene-vinyl acetate copolymer, which may be used singly or in combination. From the viewpoint of providing product members having improved scratch resistance, preferred ones include thermosetting resin, ultraviolet curable resin, electron beam curable resin, and heat ray curable resin, of which ultraviolet curable resin and electron beam curable resin are more preferred. The use of ultraviolet curable acrylic resin or electron beam curable acrylic resin is still more preferred.

The method used for forming a decorative layer on the film according to the present invention is not particularly limited unless the effect of the present invention is impaired, and good examples include coating, printing, and metal deposition. Good resins for the decorative layer include polyester based resin, polyolefin based resin, acrylate based resin, urethane based resin, fluorine based resin, polyvinyl acetate based resin, vinyl chloride-vinyl acetate copolymer, and ethylene-vinyl acetate copolymer.

The colorant used in the decorative layer is not particularly limited unless the effect of the present invention is impaired, and an appropriate one may be selected from various dyes, inorganic pigments, and organic pigments in consideration of dispersibility in the resin used in the decorative layer.

When a decorative layer is produced by coating or printing, it is preferable, from the viewpoint of color tone retention and design realized after molding, that the thickness thereof is 1 µm or more and 100 µm or less, more preferably 2 µm or more and 50 µm or less, and still more preferably 5 µm or more and 40 µm or more.

In the case where a decorative layer is produced by metal deposition, the method used for producing the deposited thin film is not particularly limited unless the effect of the present invention is impaired, and useful methods include the vacuum deposition method, EB deposition method, sputtering method, and ion plating method.

The metal used for the metal deposition is not particularly limited unless the effect of the present invention is impaired, but from the viewpoint of moldability of the decorative layer, preferred ones include indium and tin, of which indium is more preferred.

In the case where a decorative layer is produced by deposited metal, it is preferable, from the viewpoint of permitting the production of a decorative layer that is high in both formability and design, that the thickness thereof is 0.001 µm or more and 100 µm or less, more preferably 0.01 µm or more and 50 µm or less, and still more preferably 0.02 µm or more and 30 µm or less.

The material of the adhesive layer that is formed on the decorative layer to impart adhesiveness to the member to be molded may be of a thermosensitive type or a pressure-sensitive type. In the case where an adhesive layer is transferred to the member to be molded, a good material may be appropriately selected to suit the material of the member to be molded.

If the member to be molded is of an acrylic resin, for example, preferred materials include acrylate based resin, polyphenylene oxide-polystyrene based resin, polycarbonate based resin, and styrene copolymer based resin, which may be used singly or in combination. If the member to be molded is formed mainly of a polystyrene based resin, preferred materials include acrylate based resin, polystyrene based resin, and polyamide based resin that have affinity therewith, which may be used singly or in combination. If the member to be molded is formed mainly of a polypropylene based resin, preferred materials include chlorinated polyolefin resin, chlorinated ethylene-vinyl acetate copolymer based resin, cyclized rubber, and coumarone-indene based resin, which may be used singly or in combination. If the member to be molded is of a metal, preferred materials include acrylate based resin, polyurethane based resin, polycarbonate based resin, polystyrene based resin, polyvinyl ether based resin, polyvinyl acetate resin, which may be used singly or in combination.

The method used for forming an adhesive layer on the film according to the present invention is not particularly limited unless the effect of the present invention is impaired, and useful ones include coating methods such as roll coating, gravure coating, and comma coating, and printing methods such as gravure printing and screen printing.

The molding member to be decorated by using a molding transfer foil produced from the molding film according to the present invention is not particularly limited unless the effect of the present invention is impaired, and examples of useful material contained as main component in the molding member include resins such as polypropylene, acrylic, polystyrene, polyacrylonitrile-styrene, and polyacrylonitrile-butadiene-styrene and metals such aluminum, magnesium, iron, titanium, copper, and zinc.

The film roll according to the present invention is characterized by having a structure in which the film according to the present invention is wound around a core. The film roll according to the present invention can be produced by winding the film according to the present invention around a core.

The method for producing the film roll according to the present is characterized by having a knurling step for forming knurled parts by passing the film between a smooth roll and a knurling roll that are fixed with a gap equal to 75% or more and 95% or less of the thickness of the film. The adoption of this embodiment allows the heights of the raised portions in the knurled parts to be adjusted easily within the above-mentioned preferable range, thereby providing a film that is excellent in smoothness, appearance quality, and surface appearance required when used for decoration. The aforementioned "smooth roll and knurling roll fixed with a gap equal to 75% or more and 95% or less of the film thickness" means a smooth roll and a knurling roll that are fixed in such a manner that the space between the top of each raised portion of the knurling roll and the smooth roll is equal to 75% or more and 95% or less of the film thickness. In the case where the heights and sizes of the raised portions of the knurling roll are not uniform, the above space refers to the gap between the top of the highest raised portion and the smooth roll.

If the gap between the smooth roll and the knurling roll is less than 75% of the film thickness, the film may be undergo excessive thermal deformation and deteriorate in the flatness and the transportability in processing steps, possibly leading to an increase in the strain at both side edge parts of the film of the film. If the gap between the smooth roll and the knurling roll is more than 95% of the film thickness, the raised portions in the knurled parts will not be formed in a complete shape, possibly impairing the effect that is expected to be realized by the presence of the raised portions.

The aforementioned knurling roll means a roll having raised portions with a height of 5 µm or more on the surface thereof (the surface with which the film comes in contact), whereas the smooth roll means a roll having no raised portions with a height of 1 µm or more on the surface thereof. The shapes of the raised portions of the knurling roll are not particularly limited unless the effect of the present invention is impaired, but it is preferable that the raised portions have such shapes as cylinder, truncated cone, triangular prism, truncated triangular pyramid, quadrangular prism, truncated quadrangular pyramid, hexagonal prism, truncated hexagonal pyramid, octagonal prism, and truncated octagonal pyramid, from the viewpoint of the processability of knurls and the processability of irregular surface regions. From the viewpoint of the processability of knurled parts and the transportability of the film, it is preferable for the surface of the smooth roll to have an arithmetic average roughness Ra of 50 nm or less, more preferably 20 nm or less, and still more preferably 10 nm or less, as measured in accordance with JIS B 0601-2001.

The surface temperature of the knurling roll is not particularly limited unless the effect of the present invention is impaired, and an appropriate one may be selected according to the characteristics of the resin to be used, but it is preferably 190°C or more and 250°C or less from the viewpoint of realizing both the formation of good knurled parts and a high productivity of the film. If the surface temperature of the knurling roll is less than 190°C, the knurled parts are not formed in a complete shape, possibly leading to a decrease in the smoothness of the film. On the other hand, when the temperature of the knurling roll exceeds 250°C, the releasability between the knurling roll and the film will deteriorate after the formation of knurled parts, and the film with decreased elasticity adheres to the knurling roll or film fragments are scattered, possibly leading to a decrease in productivity. In view of the above, the surface temperature of the knurling roll is more preferably 195°C or more and 240°C or less, and still more preferably 200°C or more and 230°C or less.

Hereinafter, the method for producing the film according to the present invention will be described more specifically, but it should be understood that the invention is not construed as being limited thereto.

First, a mixture containing a pellet-like cyclic olefin resin as main component is supplied to an extruder, where it is heated and melted. Next, the extrusion rate of the heated and melted resin composition is kept uniform by a gear pump or the like, and foreign matter and denatured resin components are removed from the heated and melted resin composition through a filter or the like. Furthermore, the resin composition deprived of foreign matter and the like is discharged through a die into a sheet-like shape and extruded onto a rotating cooling body such as casting drum, and cooled and solidified between the rotating cooling body and another rotating body, such as a nip roll having an appropriately adjusted nip pressure, which forms a matched set with the former. Then, the film is passed between two sets of heated knurling rolls and smooth rolls, each disposed at either end of the film, to form longitudinally arranged knurled parts at both side edge parts of the film of the film. In this step, the gaps between the knurling rolls and smooth rolls are adjusted to be 75% or more and 95% or less of the film thickness. The resulting film having knurled parts is then wound on a core in the winding step to provide a film roll.

### EXAMPLES

The present invention will be illustrated below in greater detail with reference to Examples, but it should be understood that the invention is not construed as being limited thereto.

### [Measurement and evaluation methods]

Measurements and evaluations described in Examples were carried out under the following conditions.

### (1) Thickness of film

Using a dial gauge, the thickness of five appropriately selected portions located outside the knurled parts of a film sample was measured, and the measurements taken was averaged to represent the thickness of the film.

### (2) Storage elastic modulus

A rectangular portion having a size of 60 mm (length direction) × 5 mm (width direction) was cut out from outside the knurled parts of the film to provide a sample. Using a dynamic viscoelasticity measuring device (DVE-V4 FT Rheospectra, manufactured by Rheology Co., Ltd.), measurements were taken under the measuring conditions given below to determine the storage elastic modulus (MPa) in the length direction at 75°C and 120°C. Except for using a rectangular sample having a size of 60 mm (width direction) × 5 mm (length direction), the same procedure was carried out to determine the storage elastic modulus (MPa) in the width direction.

### <Measuring conditions>

Frequency: 10 Hz
Test length: 20 mm
Displacement amplitude: 10 µm
Measuring temperature range: 25°C to 160°C
Heating rate: 5°C/min

### (3) Surface roughness Ra of smooth roll

In accordance with JIS B 0601-2001, the two-dimensional center line average roughness Ra of the surface of the smooth roll was measured by a surface roughness meter (Surftest (registered trademark) SJ-210, manufactured by Mitsutoyo Corporation), and the measured value was used to represent the surface roughness Ra. The measuring conditions used were as described below.

### <Measuring conditions>

Stylus end radius: 2 µm,
Measuring force: 0.75 mN
Measured length: 25 mm
Cut-off value: 0.08 mm
Measuring direction: width direction of smooth roll

### (4) Gap between knurling roll and smooth roll / film thickness

The size of the space between the tops of the raised portions of the knurling roll and the smooth roll was measured with a caliper (Super Caliper (registered trademark) CD67-S, manufactured by Mitsutoyo Corporation), and the measured value was taken to represent the gap between the knurling roll and the smooth roll, followed by calculating the percentage of the gap to the thickness of the film to represent the gap between the knurling roll and the smooth roll / the thickness of the film.

### (5) Maximum diameter of depressed portion of knurled part, height of raised portion, and X/Y

The area of the depressed portions (X mm²) and the area of the raised portions (Y mm²) of the knurled parts were determined from images of the surface morphology observed by an optical interference microscopy (VertScan (registered trademark) 2.0, manufactured by Ryoka Systems, Inc.) under the following conditions: observing mode = Forcus mode, filter = 530 nm white, and ScanRange =105 nm. Furthermore, scanning in the measuring mode was performed perpendicularly to the film surface to obtain a schematic cross-section in the thickness direction of a knurled part, followed by determining the maximum diameter of the depressed portion of a knurled part and the height of the raised portion of the knurled part. For each item, three measurements were taken from each sample, and their average was calculated.

### (6) Strain of film at both side edge parts of the film

A sample having a size of 500 mm (length direction) × 1,000 mm (width direction) was cut out appropriately from a film roll, and the strain was measured at the end portions of the resulting sample. The sample was placed on a laboratory table (Type LCA, manufactured by Yamato Scientific Co., Ltd.) and the height of the film from the laboratory table was measured using a caliper (Super Caliper CD67-S, manufactured by Mitsutoyo Co., Ltd.) to represent the strain. Three measurements were taken at each side edge part of the film, and their average was taken to represent the strain of the film at each side edge part of the film.

### (7) Windability of film

In the winding-up step in the film production process, the conditions of the film being conveyed and the surface of the film wound up into a roll were observed and the windability was evaluated according to the following criteria. Films showing a highest-level windability were rated as A, and those rated as B or higher were judged to be acceptable.
A: Conveyance of the film was performed in good conditions and visual observation shows that the wound-up film roll was completely free of creases, flaws, concavities, convex deformation, and film fragments.
B: Conveyance of the film was performed in good conditions, but visual observation shows that the wound-up film roll had practically insignificant creases, flaws, concavities, convex deformation, or film fragments.
C: Conveyance of the film was performed in inferior conditions (suffering from meandering, waving etc. during conveyance), and visual observation shows that the wound-up film roll had practically significant creases, flaws, concavities, convex deformation, or film fragments.

### (8) Processability in decorative layer formation step

A black ink prepared by dispersing carbon black in an acrylic resin (6500B, manufactured by Toyo Chemicals Co., Ltd.) was spread on the surface of a film sample unwound from a film roll using a coating apparatus (manufactured by Yasui Seiki Inc.) equipped with an applicator, and dried at 80°C for 5 minutes to form a decorative layer having a coating film thickness of 30 µm. The film coated with a decorative layer was rewound and visually observed to evaluate the processability according to the following criteria. Samples showing a highest-level processability in the decorative layer formation step were rated as A, and those rated as C or higher were judged to be acceptable.

A: The film roll was free of creases, concavities, convex deformations, coating defects, and film cracks that were observable.
B: The wound-up film roll suffered from any of creases, concavities, convex deformations, dot-like coating defects, and film cracks although they were practically insignificant.
C: The wound-up film roll suffered from linear coating defects although they were practically insignificant.
D: The film was broken during conveyance and could not be wound up. Or the wound-up film roll suffered from any of creases, concavities, convex deformations, coating defects, and film cracks, of which at least one was practically significant.

Note that for coating defects, those with a maximum diameter of 5 mm or less were referred to as dot-like defects, whereas those with a maximum diameter of more than 5 mm were referred to as linear defects. The maximum diameter of a coating defect means the distance between the two points on its perimeter that are the farthest from each other.

### (9) Moldability of molding transfer foil

An acrylic/urethane black ink was applied to the surface of a sample of a film roll using an applicator to form a decorative layer. Then, a test piece having a size of 200 mm (length direction) × 300 mm (width direction) was cut out from an appropriate position outside the knurled parts of the above film roll sample. A modified olefin based hot-melt adhesive (PES-360HV, manufactured by Toagosei Co., Ltd.) was applied on the surface of the decorative layer of the film sample using an applicator, and dried at 80°C for 10 minutes to form an adhesive layer having a coat thickness of 20 µm. The sample coated with an adhesive layer was heated to a temperature of 120°C using a three dimensional vacuum-heating molding machine (NGF-0406-T type TOM molding machine, manufactured by Fu-se Vacuum Forming Ltd.) and fed along a resin mold made of polypropylene (diameter of bottom face 150 mm) heated at 50°C to perform vacuum-pressure molding (pressure 0.2 MPa) to provide a molded body having a structure of film / decorating layer / adhesive layer / polypropylene resin mold. The resulting molded body was examined to determine its condition after molding along the mold (drawing ratio = molding height / bottom face diameter), and the molding transfer foil moldability was evaluated according to the following criteria. Molding transfer foils showing a highest-level moldability were rated as A, and those rated as C or higher were judged to be acceptable.

A: Able to be molded to a drawing ratio of 1.0 or more
B: Able to be molded to a drawing ratio of 0.8 or more and less than 1.0, but was unable to be molded to a drawing ratio of 1.0 or more
C: Able to be molded to a drawing ratio of 0.7 or more and less than 0.8, but was unable to be molded to a drawing ratio of 0.8 or more
D: Unable to be molded to a drawing ratio of 0.7 or more

### (10) Surface appearance of product member (molded member obtained after molding and decoration)

An acrylic/urethane black ink was applied on the surface of a film roll using a die coater and dried at 80°C for 10 minutes to form a decorative layer having a coat thickness of 30 µm. On the decorative layer, furthermore, 892L manufactured by Japan Chemical Industries Co., Ltd. was applied with an applicator, followed by drying at 80°C for 10 minutes to form an adhesive layer having a coat thickness of 20 µm and provide a roll of molding transfer foil.

A molding transfer foil test piece having a size of 200 mm (length direction) × 300 mm (width direction) was cut out from an appropriate position of the resulting molding transfer foil. Then, the molding transfer foil was put on the molded member to form a structure of film / decorative layer / adhesive layer / molding member (planar polypropylene resin mold) stacked in this order, and processed by vacuum-pressure molding, and the resulting molded body was irradiated with ultraviolet rays to an irradiation intensity of 2,000 mJ/cm² to cure the coating liquid. Subsequently, only the film was peeled off and the surface of the resulting product member was observed at a magnification of 5 using a scanning white-light interference microscope (VS-1000, manufactured by Hitachi High Technologies), followed by evaluating its surface appearance (waving: maximum height - minimum height of the product member) according to the following criteria. Product members (molded members after molding and decoration) showing a highest-level surface appearance were rated as A, and those rated as B or higher were judged to be acceptable.

A: Having a waving of less than 0.01 mm.
B: Having a waving of 0.01 mm or more and less than 0.1 mm.
C: Having a waving of more than 0.1 mm.

### (11) Thickness of decorative layer and adhesive layer

The thickness of the decorative layer and adhesive layer of a film was determined by taking a cross-sectional photograph of the film at a magnification of 100 times using a metallographic microscope (Leica DM LM, manufactured by Leica Microsystems), measuring the thickness at five appropriate positions in each layer selected based on the photograph obtained, and calculating the average of the measurements.

### [Resins used for film preparation]

### (Cyclic olefin based resin A)

TOPAS (registered trademark) 8007F-04, manufactured by Polyplastics Co., Ltd.

### (Cyclic olefin based resin B)

TOPAS (registered trademark) 6013F-04, manufactured by Polyplastics Co., Ltd.

### (Polyethylene based resin)

Evolue (registered trademark) SP2540, manufactured by Prime Polymer Co., Ltd.

### (Example 1)

Film samples having components and features as specified in Table 1 were prepared, and each sample was supplied to a single screw extruder (L/D = 30), melted at a temperature of 230°C in the inlet portion and at a temperature of 240°C in the subsequent portions, passed through a leaf disk filter having a filtration granularity of 30 µm, and discharged through a T die (lip gap 0.4 mm) into a sheet-like shape on a mirror finished metal roll (surface roughness Ra 0.01 µm) controlled at a temperature of 40°C to provide a cast film. In this step, nipping was performed by a matte rubbery shaping roll having a temperature controlled at 30°C (surface roughness Ra 0.7 µm, nip pressure 0.2 MPa). Then, the resulting cast film was passed through the gap (85 µm) between a knurling roll having five raised portions, each having a truncated cone shape with an upper base diameter of 0.7 mm and a lower base diameter of 1.0 mm, aligned at equal intervals in the width direction, and a smooth roll, which were heated at 210°C to produce knurled parts, each having a width of 10 mm, in each side region ranging between a distance of 10 mm or more and a distance of 20 mm or less measured from either side edge part of the film, and wound by a winder to provide a film roll of a wound film having a film thickness of 100 µm, a width of 1,000 mm, and a length of 500 m. Table 1 shows evaluation results of the films, molding transfer foils formed thereof, and product members. Note that the driven side of the roll being conveyed is referred as side A, whereas the non-driven side is referred to as side B.

### (Examples 2-9, Comparative Examples 1-7)

Except that the heating temperature of the knurling roll, the upper base of the knurling roll, and the gap between the knurling roll and the smooth roll were as described in Tables 1 and 2, the same procedure as in Example 1 was carried out to prepare a film roll. Evaluation results of the film as well as the molding transfer foil and product member formed thereof are included in Tables 1 and 2.

### (Comparative Example 8)

Except for omitting the formation of knurled parts, the same procedure as in Example 1 was carried out to provide a film roll. Evaluation results of the film as well as the molding transfer foil and product member formed thereof are included in Table 2.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Components of film | cyclic olefin based resin (mass%) | A | 67 | 67 | 67 | 67 | 67 | 67 | 67 | 67 | 67 |
| | | B | 30 | 30 | 30 | 30 | 30 | 30 | 30 | 30 | 30 |
| | polyethylene based resin (mass%) | | 3 | 3 | 3 | 3 | 3 | 3 | 3 | 3 | 3 |
| Film thickness (µm) | | | 100 | 100 | 100 | 100 | 100 | 100 | 100 | 100 | 100 |
| Storage elastic modulus at 75°C (MPa) | length direction | | 2500 | 2500 | 2500 | 2500 | 2500 | 2500 | 2500 | 2500 | 2500 |
| | width direction | | 2500 | 2500 | 2500 | 2500 | 2500 | 2500 | 2500 | 2500 | 2500 |
| Storage elastic modulus at 120°C (MPa) | length direction | | 15 | 15 | 15 | 15 | 15 | 15 | 15 | 15 | 15 |
| | width direction | | 15 | 15 | 15 | 15 | 15 | 15 | 15 | 15 | 15 |
| Knurling roll | heated temperature (°C) | | 210 | 210 | 210 | 195 | 245 | 210 | 210 | 210 | 210 |
| | knurling shape | | truncated cone | truncated cone | truncated cone | truncated cone | truncated cone | truncated cone | truncated cone | truncated cone | truncated cone |
| | Diameter of upper base (mm) | | 0.7 | 0.7 | 0.7 | 0.7 | 0.7 | 0.4 | 1.1 | 1.8 | 2.2 |
| Smooth roll | surface roughness Ra (nm) | | 15 | 15 | 15 | 15 | 15 | 15 | 15 | 15 | 15 |
| Gap between knurling roll and smooth roll / film thickness (%) | | | 85 | 93 | 77 | 85 | 85 | 85 | 85 | 85 | 85 |
| Knurled part | maximum diameter of depressed portion (mm) | | 0.7 | 0.7 | 0.7 | 0.7 | 0.7 | 0.4 | 1.1 | 1.8 | 2.2 |
| | height of raised portion (µm) | | 15 | 12 | 19 | 12 | 15 | 15 | 15 | 15 | 15 |
| | area of depressed portion (mm²) | | 0.38 | 0.38 | 0.38 | 0.38 | 0.38 | 0.13 | 0.95 | 2.54 | 3.80 |
| | area of raised portion (mm²) | | 0.12 | 0.12 | 0.12 | 0.12 | 0.12 | 0.07 | 0.18 | 0.29 | 0.35 |
| | X/Y | | 3.3 | 3.3 | 3.3 | 3.3 | 3.3 | 1.8 | 5.3 | 8.8 | 11 |
| Strain of film at edge | A side | | 0.5 | 0.3 | 1.2 | 1.0 | 0.3 | 0.5 | 0.5 | 0.5 | 0.5 |
| | B side | | 0.4 | 0.3 | 1.2 | 1.1 | 0.3 | 0.5 | 0.5 | 0.5 | 0.5 |
| Thickness of decorative layer (µm) | | | 30 | 30 | 30 | 30 | 30 | 30 | 30 | 30 | 30 |
| Thickness of adhesive layer (µm) | | | 20 | 20 | 20 | 20 | 20 | 20 | 20 | 20 | 20 |
| Film windability | | | A | B | A | B | B | B | A | B | B |
| Processability during decorative layer formation | | | A | A | B | B | A | A | B | B | C |
| Structure of molding transfer foil | | | film / decorative layer / adhesive layer | | | | | | | | |
| Moldability of molding transfer foil | | | A | A | A | A | A | A | A | A | A |
| Surface appearance of product member | | | A | B | A | B | A | B | A | A | A |

The content of each component was calculated as a percentage to the total weight of all components of the film, which accounts for 100%. The maximum diameter (mm) of the depressed portions and the height (µm) of the raised portions are the same on both width-direction ends. These features also apply to Table 2.

**[Table 2]**

| | | | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|---|
| Components of film | cyclic olefin based resin (mass%) | A | 67 | 67 | 67 | 67 | 67 | 67 | 0 | 67 |
| | | B | 30 | 30 | 30 | 30 | 30 | 30 | 0 | 30 |
| | polyethylene based resin (mass%) | | 3 | 3 | 3 | 3 | 3 | 3 | 100 | 3 |
| Film thickness (µm) | | | 100 | 100 | 100 | 100 | 100 | 100 | 100 | 100 |
| Storage elastic modulus at 75°C (MPa) | length direction | | 2500 | 2500 | 2500 | 2500 | 2500 | 2500 | 950 | 2500 |
| | width direction | | 2500 | 2500 | 2500 | 2500 | 2500 | 2500 | 900 | 2500 |
| Storage elastic modulus at 120°C (MPa) | length direction | | 15 | 15 | 15 | 15 | 15 | 15 | 400 | 15 |
| | width direction | | 15 | 15 | 15 | 15 | 15 | 15 | 380 | 15 |
| Knurling roll | heated temperature (°C) | | 210 | 210 | 180 | 260 | 210 | 100 | 210 | - |
| | knurling shape | | truncated cone | truncated cone | truncated cone | truncated cone | truncated cone | truncated cone | truncated cone | - |
| | Diameter of upper base (mm) | | 0.7 | 0.7 | 0.7 | 0.7 | 2.6 | 0.7 | 0.7 | - |
| smooth roll | surface roughness Ra(nm) | | 15 | 15 | 15 | 15 | 15 | 15 | 15 | - |
| Gap between knurling roll and smooth roll / film thickness (%) | | | 97 | 65 | 85 | 85 | 91 | 50 | 97 | - |
| Knurled part | maximum diameter of depressed portion (mm) | | 0.7 | 0.7 | 0.7 | 0.7 | 2.6 | 0.7 | 0.7 | - |
| | height of raised portion (µm) | | 8 | 20 | 8 | 15 | 15 | 25 | 2 | - |
| | area of depressed portion (mm²) | | 0.38 | 0.38 | 0.38 | 0.38 | 5.31 | 0.38 | 0.38 | - |
| | area of raised portion (mm²) | | 0.12 | 0.12 | 0.12 | 0.12 | 0.42 | 0.12 | 0.12 | - |
| | X/Y | | 3.3 | 3.3 | 3.3 | 3.3 | 13 | 3.3 | 3.3 | - |
| Strain of film at edge | Aside | | 0.1 | 2.4 | 0.1 | 0.3 | 0.2 | 3.0 | 0.1 | 0.0 |
| | B side | | 0.1 | 2.5 | 0.1 | 0.2 | 0.2 | 3.1 | 0.1 | 0.0 |
| Thickness of decorative layer (µm) | | | 30 | 30 | 30 | 30 | 30 | 30 | 30 | 30 |
| Thickness of adhesive layer (µm) | | | 20 | 20 | 20 | 20 | 20 | 20 | 20 | 20 |
| Film windability | | | C | A | C | C | C | C | A | C |
| Processability during decorative layer formation | | | B | B | B | A | D | B | B | A |
| Structure of molding transfer foil | | | film / decorative layer / adhesive layer | | | | | | | |
| Moldability of molding transfer foil | | | A | A | A | A | A | A | D | A |
| Surface appearance of product member | | | C | C | C | A | C | B | B | C |

### INDUSTRIAL APPLICABILITY

The present invention can provide a film showing high transportability and processability in production and processing steps of the film and also having high appearance quality and moldability, a molding transfer foil using the film, a roll produced by winding the film, and a method for producing the film. The use of the film and the molding transfer foil according to the present invention serves to allow product members (molded members obtained after molding and decoration) produced in various molding methods such as vacuum molding, pneumatic molding, and press molding to have excellent design properties. Therefore, the film and the molding transfer foil according to the present invention can be suitably used for decorating molded members such as for building materials, automobile parts, mobile phones, electrical appliances, and gaming machine parts.

### EXPLANATION OF NUMERALS

1: Film
2: Knurled part
3: Depressed portion of knurled part
4: Raised portion of knurled part
5: Length direction
6: Regions containing longitudinally arranged knurled parts
7: Length of repeated pattern
8: Film surface
9: Maximum diameter of depressed portion of knurled part
10: Height of raised portion of knurled part

## Claims

1. A film comprising a cyclic olefin resin as main component,
having a strain of 0.3 mm or more and 2.0 mm or less, as measured according to the description, at both side edge parts of the film,
and having longitudinally arranged knurled parts in each side region ranging between a distance of 1 mm or more and a distance of 100 mm or less measured from either side edge part of the film, each raised portion in the knurled parts in both side regions having a height equal to 10% or more and less than 20% of the film thickness.

2. A film as set forth in claim 1, wherein the maximum diameter of each depressed portion in the knurled parts in both side regions is 0.1 mm or more and less than 2.0 mm.

3. A film as set forth in either claim 1 or 2, wherein X/Y is 0.5 or more and 10 or less wherein X (mm²) is the area of each depressed portion and Y (mm²) is the area of each raised portion in the knurled parts.

4. A film as set forth in any one of claims 1 to 3, wherein the film is a molding film.

5. A film as set forth in claim 4, wherein the molding film is a film for molding transfer foil.

6. A molding transfer foil comprising a film as set forth in any one of claims 1 to 5, a decorative layer, and an adhesive layer disposed in this order.

7. A molding transfer foil as set forth in claim 6, wherein a protective layer is located between the film and the decorative layer.

8. A film roll having a structure in which a film as set forth in any one of claims 1 to 5 is wound around a core.

9. A method for producing a film as set forth in any one of claims 1 to 5 including a knurling step for forming knurled parts by passing the film between a smooth roll and a knurling roll that are fixed with a gap equal to 75% or more and 95% or less of the thickness of the film.

10. A method for producing a film as set forth in claim 9, wherein the temperature of each knurling roll is 190°C or more and 250°C or less.

## Patentansprüche

1. Folie, umfassend ein cyclisches Olefinharz als Hauptkomponente,
mit einer Dehnung von 0,3 mm oder mehr und 2,0 mm oder weniger an beiden Seitenkantenteilen der Folie, gemessen gemäß der Beschreibung,
und mit längs angeordneten gerändelten Teilen in jedem Seitenbereich, die zwischen einem Abstand von 1 mm oder mehr und einem Abstand von 100 mm oder weniger, gemessen von jedem Seitenkantenteil der Folie, liegen,
wobei jeder erhöhte Abschnitt in den gerändelten Teilen in beiden Seitenbereichen eine Höhe von 10 % oder mehr und weniger als 20 % der Foliendicke aufweist.

2. Folie gemäß Anspruch 1, wobei der maximale Durchmesser jedes vertieften Abschnitts in den gerändelten Teilen in beiden Seitenbereichen 0,1 mm oder mehr und weniger als 2,0 mm beträgt.

3. Folie gemäß Anspruch 1 oder 2, wobei X/Y 0,5 oder mehr und 10 oder weniger beträgt, wobei X (mm²) die Fläche jedes vertieften Abschnitts ist, und wobei Y (mm²) die Fläche jedes erhöhten Abschnitts in den gerändelten Teilen ist.

4. Folie gemäß einem der Ansprüche 1 bis 3, wobei die Folie eine Formfolie ist.

5. Folie gemäß Anspruch 4, wobei die Formfolie eine Folie für eine Formübertragungsfolie ist.

6. Formübertragungsfolie, umfassend eine Folie gemäß einem der Ansprüche 1 bis 5, eine Dekorschicht und eine Klebeschicht, die in dieser Reihenfolge angeordnet sind.

7. Formübertragungsfolie gemäß Anspruch 6, wobei eine Schutzschicht zwischen der Folie und der Dekorschicht angeordnet ist.

8. Folienrolle mit einer Struktur, bei der eine Folie gemäß einem der Ansprüche 1 bis 5 um einen Kern gewickelt ist.

9. Verfahren zur Herstellung einer Folie gemäß einem der Ansprüche 1 bis 5, umfassend einen Rändelschritt zum Bilden von gerändelten Teilen durch Hindurchführen der Folie zwischen einer glatten Rolle und einer Rändelrolle, die mit einem Spalt von 75 % oder mehr und 95 % oder weniger der Dicke der Folie fixiert sind.

10. Verfahren zur Herstellung einer Folie gemäß Anspruch 9, wobei die Temperatur jeder Rändelrolle 190 °C oder mehr und 250 °C oder weniger beträgt.

## Revendications

1. Film comprenant une résine d'oléfine cyclique comme composant principal,
ayant un déformation de 0,3 mm ou plus et de 2,0 mm ou moins, mesuré conformément à la description, aux deux parties de bord latéral du film,
et ayant des parties moletées disposées longitudinalement dans chaque région latérale s'étendant entre une distance de 1 mm ou plus et une distance de 100 mm ou moins mesurée à partir de chaque partie de bord latéral du film,
où chaque partie surélevée dans les parties moletées des deux régions latérales a une hauteur de 10 % ou plus et de moins de 20 % de l'épaisseur du film.

2. Film selon la revendication 1, où le diamètre maximum de chaque partie enfoncée dans les parties moletées des deux régions latérales est de 0,1 mm ou plus et de moins de 2,0 mm.

3. Film selon la revendication 1 ou 2, où X/Y est de 0,5 ou plus et de 10 ou moins, X (mm²) étant la superficie de chaque partie enfoncée, et Y (mm²) étant la superficie de chaque partie surélevée dans les parties moletées,

4. Film selon l'une quelconque des revendications 1 à 3, où le film est un film de moulage.

5. Film selon la revendication 4, où le film de moulage est un film pour une feuille de transfert de moulage.

6. Feuille de transfert de moulage comprenant un film selon l'une quelconque des revendications 1 à 5, une couche décorative, et une couche adhésive disposées dans cet ordre.

7. Feuille de transfert de moulage selon la revendication 6, où une couche protectrice est disposée entre le film et la couche décorative.

8. Rouleau de film ayant une structure dans laquelle un film selon l'une quelconque des revendications 1 à 5 est enroulé autour d'un noyau.

9. Procédé de production d'un film selon l'une quelconque des revendications 1 à 5, comprenant une étape de moletage pour former des parties moletées en faisant passer le film entre un rouleau lisse et un rouleau de moletage qui sont fixés avec un espace de 75 % ou plus et 95 % ou moins de l'épaisseur du film.

10. Procédé de production d'un film selon la revendication 9, où la température de chaque rouleau de moletage est de 190 °C ou plus et de 250 °C ou moins.
